Europäisches Patentamt

European Patent Office

Office européen des brevets

(19)

(11) Publication number: **0 371 146**

**A1**

(12)

# EUROPEAN PATENT APPLICATION
## published in accordance with Art. 158(3) EPC

(21) Application number: **89906443.0**

(22) Date of filing: **29.05.89**

(86) International application number:
**PCT/JP89/00535**

(87) International publication number:
**WO 89/12264 (14.12.89 89/29)**

(51) Int. Cl.⁵: **G05B 19/19**

(30) Priority: **30.05.88 JP 132372/88**

(43) Date of publication of application:
**06.06.90 Bulletin 90/23**

(84) Designated Contracting States:
**DE FR GB**

(71) Applicant: **FANUC LTD**
**3580, Shibokusa Aza-Komanba Oshino-mura**
**Minamitsuru-gun Yamanashi 401-05(JP)**

(72) Inventor: **KOHARI, Katsuo**
**35-210, Fujimi-cho 6-chome**
**Tachikawa-shi Tokyo 190(JP)**
Inventor: **KONO, Shinichi Fanuc Mansion**
**Harimomi 7-203**
**3539-1, Shibokusa Oshino-mura**
**Minamitsuru-gun Yamanashi 401-05(JP)**
Inventor: **TAKAHASHI, Hironobu Fanuc Dai-3**
**Vira-karamatsu**
**3527-1, Shibokusa Oshino-mura**
**Minamitsuru-gun Yamanashi 401-05(JP)**

(74) Representative: **Billington, Lawrence Emlyn et al**
**HASELTINE LAKE & CO Hazlitt House 28**
**Southampton Buildings Chancery Lane**
**London WC2A 1AT(GB)**

(54) **NUMERICAL CONTROLLER.**

(57) A numerical controller having a control function which permits a main axis to be stopped at any absolute position by a drive motor to determine the position of the main axis that controls the positioning. The numerical controller has storage means (6) for storing data related to a motor stop position and the rotational direction included in a control instruction via transfer means (3) which transfers the control instruction to the corresponding drive means, and has calculation means (7) which calculates a drive signal for stopping the motor at a predeter- mined position based on the stored data and feed-back signals related to the speed and position of the motor. With the absolute position such as an angle and the rotational direction up to that position being instructed from the numerical controller, the motor side determines its position by itself.

Fig. 1

-1-

## DESCRIPTION

### NUMERICAL CONTROL APPARATUS

Technical Field

This invention relates to a numerical control apparatus in which a drive motor for driving a spindle is controlled so as to stop at a fixed position.

Background Art

In a machine tool, especially a machine tool having a tool changing device, a tool mounted on a spindle is stopped and loaded in a tool magazine at the end of a series of machining operations, another tool is selected and mounted on the spindle and the next machining operation is carried out.  To accomplish this, positioning control for stopping the spindle at any position using a conventional NC apparatus is performed by sending a command from the NC apparatus to a motor drive device to place the latter in a position control mode, and exercising control while ascertaining the actual position of the spindle on the NC apparatus side as by an error operational amplifier.

With a conventional NC apparatus of this kind, positional precision when stopping the spindle is essential in terms of performing the tool exchange smoothly.  To this end, it is necessary to transfer data for position monitoring to a processor on the side of the NC apparatus and control the absolute position of each part of the machine tool, such as the spindle thereof, on the NC apparatus side based on the

-2-

transferred data.  A problem that arises is a greater burden upon the processor of the NC apparatus.

Disclosure of the Invention

The present invention has been devised in order to solve the foregoing problem and its object is to provide a numerical control apparatus in which whatever is required for spindle stopping control is provided beforehand as command data by the NC apparatus, whereby control of stopping position is performed independently on the motor side without the transfer of position monitoring data each time positioning is carried out.

In accordance with the present invention, there can be provided a numerical control apparatus for controlling each of a plurality of driving means inclusive of a spindle control motor by corresponding control commands, characterized by comprising transfer means for transferring the control commands to respective ones of the corresponding driving means, memory means for storing data relating to motor stopping position and rotating direction included in the control commands, and arithmetic means for computing a driving signal, which stops the motor at a predetermined position, from the stored data and feedback signals regarding motor velocity and position, the motor being driven and positioning control for stopping the motor being performed based on the control commands and driving signal.

The numerical control apparatus of the present invention temporarily stores the transferred control

-3-

commands and is capable of stopping the motor at the predetermined position by virtue of the feedback signals regarding motor velocity and position based on the data relating to motor stopping position and rotating direction included in the commands.

Accordingly, when the drive motor driving the spindle is controlled to stop at a fixed position, the motor side is capable of performing stopping-position control on its own without requiring a transfer of the position monitoring data each time. This makes it possible to lighten the burden on the processor of the NC apparatus.

Brief Description of the Drawings

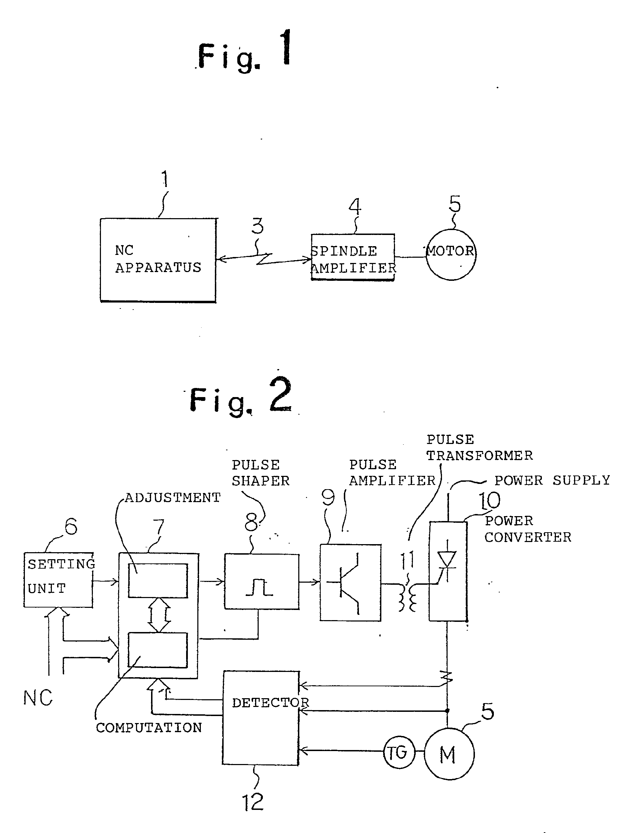

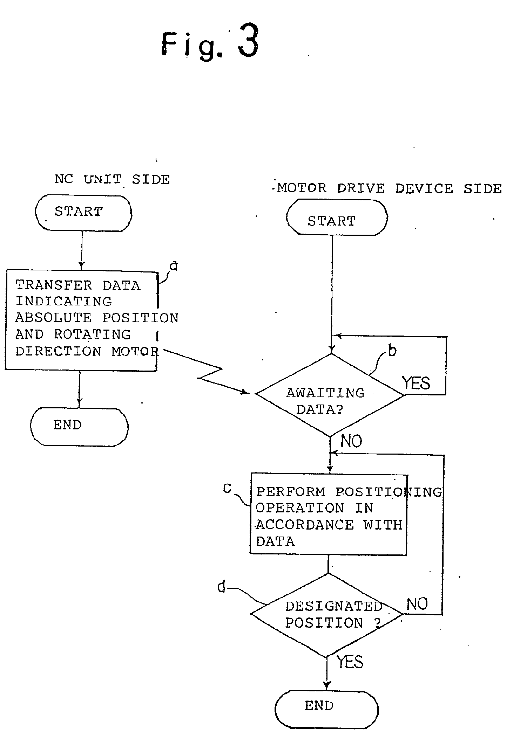

Fig. 1 is a block diagram illustrating an embodiment of the present invention, Fig. 2 is a block diagram illustrating an example of the construction of a motor drive device, and Fig. 3 is a diagram showing the control flow of the motor drive device controlled by the numerical control apparatus.

Best Mode for Carrying Out the Invention

An embodiment of the present invention will now be described in detail with reference to the drawings.

Fig. 1 is a view illustrating an example of the construction of a numerical control system according to the invention. An NC apparatus 1 transfers a required velocity command and the like as serial data to a motor drive device such as a machine tool spindle amplifier 4 data linked via a cable 3 for transferring

-4-

predetermined data. The spindle amplifier 4 has an internal microprocessor for data processing. When it is transferred the data necessary for spindle motor control, the spindle amplifier 4 stores the data in a prescribed memory and controls the voltage and current of a spindle motor 5 upon performing the necessary processing using the transferred data and feedback data from sensors which sense the velocity and position of the spindle motor 5.

Fig. 2 is a block diagram illustrating an example of the construction of the abovementioned motor drive device for controlling the motor.

The device is constituted by a signal controller which processes various commands from the NC apparatus 1 as well as feedback data, and a power converter of the spindle motor 5 connected to a power supply. The former includes a setting unit 6, an adjusting arithmetic unit 7, a pulse shaping unit 8 and a gate pulse amplifying unit 9, and is connected to the latter, namely a power converter 10, by an interface comprising a gate pulse transformer 11 and a detector 12. The detector 12, in addition to signals indicative of detected current and voltage, receives a signal indicative of the rotational velocity of the spindle motor 5 from a tachogenerator TG. The power converter 10, which is constituted by thyristors, power transistors and the like, receives power from a power system serving as an energy source and supplies the

-5-

controlled power to the spindle motor 5. It is permissible to adopt an arrangement in which the NC apparatus and the motor drive device are directly connected by a data bus on the NC apparatus side. Further, it is possible for a portion of the signal processing circuit in the motor drive device to be incorporated in the NC apparatus.

Fig. 3 is a diagram showing the control flow of the motor drive device controlled by the numerical control apparatus.

Data indicative of absolute position and rotating direction for deciding the stopping position of the spindle motor is included beforehand in a command block read out at a predetermined timing (step a), and the data, along with control data for spindle drive, is transferred from the NC apparatus side to the machine tool side through the cable 3. Meanwhile, on the side of the spindle motor drive device, the received data is temporarily stored in the setting unit 6 (step b). When conditions for starting a positioning operation in dependence upon the data contents are satisfied, the spindle is controlled to stop the absolute position indicated by the data (steps c, d). Control for stopping the spindle is carried out by computing a driving signal, which stops the motor at a prescribed position, based on feedback signals regarding motor velocity and position.

Thus, in accordance with the present invention,

-6-

the problem encountered in the conventional numerical control apparatus is solved, namely the increased burden upon the processor of the NC apparatus caused by the sequential transfer to the motor drive device of the results of processing necessary for changeover to the position control mode at the time the spindle is to be stopped. In the present invention, the burden on the processing in the NC apparatus is lightened because positioning control is performed independently on the side of the motor drive device. This makes it possible to apply control commands highly efficiently with regard to the various driving means of a machine tool.

Though an embodiment of the present invention has been described, the invention is not limited to this embodiment but can be modified in various ways without departing from the scope of the claims.

Industrial Applicability

The numerical control apparatus of the present invention is such that the spindle of a machine tool having a tool changing device is controlled to stop at any position so that machining can be performed successively by means of a plurality of tools.

-7-

CLAIMS:

1.   A numerical control apparatus for driving and stop-positioning controlling a plurality of driving means inclusive of a spindle control motor by corresponding control commands and driving signals, comprising:

transfer means for transferring said control commands to respective ones of the corresponding driving means;

memory means for storing data relating to motor stopping position and rotating direction included in said control commands; and

arithmetic means for computing a driving signal, which stops said motor at a predetermined position, from the stored data and feedback signals regarding motor velocity and position.

2.   A numerical control apparatus according to claim 1, characterized in that said transfer means is a transfer cable for transferring serial data inclusive of a velocity command.

3.   A numerical control apparatus according to claim 1, characterized in that said arithmetic means is a microprocessor provided for each of the driving means.

# Fig. 1

NC
APPARATUS
*1*

*3*

SPINDLE
AMPLIFIER
*4*

MOTOR
*5*

# Fig. 2

SETTING
UNIT
*6*

ADJUSTMENT
*7*

PULSE
SHAPER
*8*

PULSE
AMPLIFIER
*9*

PULSE
TRANSFORMER
*11*

POWER SUPPLY

POWER
CONVERTER
*10*

NC

COMPUTATION

DETECTOR
*12*

TG    M
*5*

# Fig. 3

NC UNIT SIDE

( START )

│

┌─────────────────────┐ a
│ TRANSFER DATA       │
│ INDICATING          │
│ ABSOLUTE POSITION   │
│ AND ROTATING        │
│ DIRECTION MOTOR     │
└─────────────────────┘

│

( END )

MOTOR DRIVE DEVICE SIDE

( START )

│

◇ AWAITING DATA? ◇  b  — YES

│ NO

┌─────────────────────┐
│ PERFORM POSITIONING │ c
│ OPERATION IN        │
│ ACCORDANCE WITH     │
│ DATA                │
└─────────────────────┘

│

◇ DESIGNATED POSITION ? ◇  d  — NO

│ YES

( END )

# INTERNATIONAL SEARCH REPORT

International Application No  PCT/JP89/00535

## I. CLASSIFICATION OF SUBJECT MATTER (if several classification symbols apply, indicate all) [6]

According to International Patent Classification (IPC) or to both National Classification and IPC

Int. Cl$^4$    G05B19/19

## II. FIELDS SEARCHED

### Minimum Documentation Searched [7]

| Classification System | Classification Symbols |
|---|---|
| IPC | G05B19/18 - 19/42, G05D3/12 |

### Documentation Searched other than Minimum Documentation to the Extent that such Documents are Included in the Fields Searched [8]

| | |
|---|---|
| Jitsuyo Shinan Koho | 1932 - 1989 |
| Kokai Jitsuyo Shinan Koho | 1971 - 1989 |

## III. DOCUMENTS CONSIDERED TO BE RELEVANT [9]

| Category * | Citation of Document, [11] with indication, where appropriate, of the relevant passages [12] | Relevant to Claim No. [13] |
|---|---|---|
| Y | JP, A, 59-83217 (Nippon Kogaku Kabushiki Kaisha) 14 May 1984 (14. 05. 84) (Family: none) | 1 - 3 |
| Y | JP, U, 61-189303 (Mitsubishi Heavy Industries, Ltd.) 26 November 1986 (26. 11. 86) (Family: none) | 1 - 3 |
| Y | JP, U, 54-9295 (Hitachi, Ltd.) 22 January 1979 (22. 01. 79) (Family: none) | 1 - 3 |
| A | JP, A, 62-184504 (Fanuc Ltd.) 12 August 1987 (12. 08. 87) (Family: none) | 1 - 3 |

* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search | Date of Mailing of this International Search Report |
|---|---|
| August 18, 1989 (18. 08. 89) | September 4, 1989 (04. 09. 89) |
| International Searching Authority | Signature of Authorized Officer |
| Japanese Patent Office | |

Form PCT ISA 210 (second sheet) (January 1985)